# EUROPÄISCHE PATENTSCHRIFT

(11) **EP 4 293 245 B1**
(45) Veröffentlichungstag und Bekanntmachung des Hinweises auf die Patenterteilung: **19.02.2025**
(21) Anmeldenummer: 22179272.4
(22) Anmeldetag: 15.06.2022
(51) Int. Cl.: F16D 27/112

(54) **ELEKTROMAGNETKUPPLUNG ODER -BREMSE**
ELECTROMAGNETIC CLUTCH OR BRAKE
EMBRAYAGE OU FREIN ÉLECTROMAGNÉTIQUE

(43) Veröffentlichungstag der Anmeldung: 20.12.2023
(73) Patentinhaber: KEB Automation KG, 32683 Barntrup (DE)
(72) Erfinder: DYLLONG, Roman, 32683 Barntrup (DE)
(74) Vertreter: Brinkmann & Partner

(56) Entgegenhaltungen:
- DE-A1- 1 475 414
- DE-A1- 102009 016 716
- DE-B- 1 055 302
- DE-U1- 8 109 726
- DE-U1- 8 109 726
- GB-A- 871 905
- US-A- 4 305 198
- US-A- 4 951 797
- US-A1- 2002 066 632
- US-A1- 2003 164 277

## Beschreibung

Die Erfindung betrifft eine Elektromagnetkupplung oder -bremse nach dem Oberbegriff des Anspruchs 1.

Elektromagnetkupplungen oder -bremsen sind aus dem Stand der Technik an sich gut bekannt. Es sei beispielshaft auf die DE 32 17 715 A1 und die EP 2 422 103 B1 verwiesen.

Die DE 32 17 715 A1 betrifft eine elektromagnetisch betätigte, schleifringlose Kupplung. Diese verfügt über einen Kupplungskörper mit einer Antriebswelle, die stirnseitig in eine Stirnplatte übergeht und randseitig eine Kupplungshülse aufweist. Um im bestimmungsgemäßen Verwendungsfall zu vermeiden, dass sich ein Magnetfluss im Kupplungskörper kurzschließt, ist die Stirnplatte durch einen eingeschweißten Ring aus magnetisch nicht leitendem Material unterbrochen. Hierdurch ist eine Trennung der Polflächen erreicht. Alternativ können zur Trennung der Polflächen eingefräste Durchbrüche vorgesehen sein. Dabei sind die die Durchbrüche voneinander trennenden Stege möglichst groß auszubilden, damit eine hinreichende Festigkeit der Kupplungshülse gewährleistet ist. Zur Trennung der Polflächen können des Weiteren alternativ geradlinig verlaufende Schlitze in die Stirnplatte des Kupplungskörpers eingefräst sein. Dabei sind die Schlitze entlang eines gedachten Quadrats angeordnet.

Aus der EP 2 422 103 B1 ist ein Verfahren zur Herstellung einer Kupplungs- und/oder einer Bremsscheibe für eine Elektromagnetkupplung und/oder eine Elektromagnetbremse bekannt, bei der in ein Reibflächenelement ein kreisförmiger Schlitz durch maschinelle Drehbearbeitung eingeschnitten wird, wodurch zwei Polflächenringe definiert werden. Dabei werden aus dem Reibflächenelement zumindest zwei Stege so herausgearbeitet, dass der von der Reibkontaktfläche her eingeschnittene Schlitzabsatz der Stege zu durchgehenden Luftspalten unterbrochen ist.

Des Weiteren sei auf die Druckschriften DE 8 09 726 U, US 4 305 198 A, US 4 9951 797 A und DE 10 2009 016 716 A1 verwiesen.

Aus der DE 8 09 726 U ist es bekannt, bei einer Elektromagnetkupplung eine Trennung der Polflächen über kreisförmig umlaufende Nuten zu erreichen. Es ist dort insbesondere vorgesehen, dass der Verbindungsabschnitt des Magnetkörpers durchbrechungsfrei ausgebildet ist und über zwei kreisförmig umlaufende Nuten verfügt und die Ankerplatte ebenfalls durchbrechungsfrei ausgebildet ist und über eine kreisförmig umlaufende Nut verfügt.

Die US 4 305 198 A offenbart, dass die Polflächen einer Elektromagnetkupplung durch ringförmige Durchbrechungen, die mit einem nicht ferromagnetischen Material ausgefüllt werden, voneinander getrennt werden. Es kann dabei durch Verpressen eine Nut in dem nicht ferromagnetischen Material ausgebildet sein.

Aus der US 4 9951 797 A ist eine Kupplungsscheibe für elektromagnetische Kupplungen oder Bremsen bekannt, die über mehrere Nuten auf beiden Seiten der Scheibe verfügen kann.

Aus der DE 10 2009 016 716 A1 ist ein Magnetgehäuse für eine Elektromagnetkupplung bekannt, bei der ein Innenring und ein Außenring eine umlaufende Nut ausbilden.

Obgleich sich vorbeschriebene Elektromagnetkupplungen oder -bremsen bzw. Verfahren zur Herstellung entsprechender Kupplungs- und/oder Bremsreibscheiben im alltäglichen Praxiseinsatz bewährt haben, besteht nach wie vor Verbesserungsbedarf. Es ist deshalb die **Aufgabe** der Erfindung, eine neuartige Elektromagnetkupplung oder -bremse vorzuschlagen, die eine vereinfachte Herstellung ermöglicht, und dies bei möglichst gleichzeitiger Funktionsverbesserung.

Zur **Lösung** dieser Aufgabe wird eine Elektromagnetkupplung oder -bremse mit den Merkmalen des Anspruchs 1 vorgeschlagen.

Es werden drei alternative Ausführungsformen vorgeschlagen. Gemäß einer ersten Alternative ist nur der Verbindungsabschnitt des Magnetkörpers durchbrechungsfrei ausgebildet und verfügt über eine kreisförmig umlaufende Nut. Gemäß einer zweiten Alternative, die nicht Teil der Erfindung ist, ist nur die Ankerplatte durchbrechungsfrei ausgebildet und mit einer kreisförmig umlaufenden Nut ausgebildet. Gemäß einer dritten Alternative werden die erste und die zweite Alternative miteinander kombiniert, sodass sowohl der Verbindungsabschnitt des Magnetkörpers als auch die Ankerplatte jeweils durchbrechungsfrei ausgebildet sind und jeweils über eine kreisförmig umlaufende Nut verfügen.

Mit Bezug auf die erste Alternative ergeben sich folgende Vorteile:
Die vorgesehene Nut bewirkt eine Poltrennung zwischen Innenpol einerseits und Außenpol andererseits, wobei aber gleichzeitig aufgrund des Verbindungsabschnittes sichergestellt ist, dass eine ausreichende mechanische Verbindung zwischen dem ersten Polbereich und dem zweiten Polbereich geschaffen ist, so dass die für einen bestimmungsgemäßen Betrieb hinreichende strukturelle Integrität gewährleistet ist.

Die Poltrennung mittels der vorgesehenen Nut wird dadurch erreicht, dass es infolge der Nutausbildung zu einer Materialverjüngung im Verbindungsabschnitt kommt. Durch diese Materialverjüngung ist eine Minimierung des magnetischen Streuflusses durch den Verbindungsabschnitt hindurch erreicht. Im Bereich der Nut kann der Verbindungsabschnitt um die Hälfte der Materialstärke, d.h. -dicke des Verbindungsabschnitts reduziert sein, vorzugsweise um mehr als 50%, beispielsweise 60%, 70%, 80% oder gar 90%. Allgemein lässt sich sagen, dass die Tiefe der Nut in Abhängigkeit des bestimmungsgemäßen Anwendungsfalls ausgebildet werden kann, wobei es das Ziel ist, bei gleichzeitiger Sicherstellung einer mechanisch stabilen Verbindung der beiden Polbereiche eine Minimierung des magnetischen Streuflusses zu erreichen. Die Nut sollte deshalb unter Einhaltung der gewünschten mechanischen Stabilität so tief wie möglich ausgeführt sein.

Die Nut ist kreisförmig umlaufend ausgebildet. Der im Querschnitt kreisförmig ausgebildet Magnetkörper ist mithin mit einer Nut ausgestattet, die umlaufend zwischen Innenpol und Außenpol ausgebildet ist, so dass eine kreisförmig geschlossene Poltrennung zwischen den beiden Polen gegeben ist.

Dabei ist der Verbindungsabschnitt durchbruchsfrei ausgebildet. Es gibt mithin keine Schlitze, Löcher oder sonstige für eine Poltrennung vorgesehene Durchbrüche. Dies schafft die Möglichkeit, allein durch eine Drehbearbeitung eine Poltrennung auszubilden. Auf ein Fräsen entweder als alleinige Bearbeitung oder in Kombination mit einem Drehen kann somit vollständig verzichtet werden, was den Herstellaufwand minimiert und auch zur Minimierung der Herstellkosten beiträgt.

Im Ergebnis der vorstehend erläuterten Ausgestaltung steht, dass eine Poltrennung allein durch Drehen hergestellt werden kann, was zeit- und kostensparend ist. Zugleich wird eine verbesserte Spannungsverteilung innerhalb des Bauteils, das heißt des Magnetkörpers erreicht, da eine umlaufend durchgängige Geometrie in Ausgestaltung der Nut vorgesehen ist. Dies erlaubt im Vergleich zu Magnetkörpern mit partiellen Ausnehmungen oder Durchbrüchen entweder höhere Belastungen oder bei gleichbleibend hohen Belastungen den Einsatz von Materialien mit geringeren Festigkeitseigenschaften, wie z. B. niedriger legierten Stählen, was kostengünstiger ist. Da niedriger legierte Stähle zudem bessere magnetische Eigenschaften aufweisen, ergibt sich neben dem Kostenvorteil zusätzlich auch ein technischer Vorteil. Denn mit besseren magnetischen Eigenschaften lassen sich höhere magnetische Kräfte auf die Ankerplatte ausbilden, was zu einer Erhöhung des übertragbaren Drehmoments führt.

Insbesondere im Falle einer Elektromagnetkupplung dient der Verbindungsabschnitt auch der Aufnahme eines Reibbelags. Dieser wird typischerweise zur Anordnung am Verbindungsabschnitt mit diesem verklebt. Die Ausgestaltung eines durchbruchfreien Verbindungsabschnitts erbringt in diesem Zusammenhang den Vorteil einer vergrößerten Klebefläche zwischen Verbindungsabschnitt und Reibbelag. Dies ermöglicht die Übertragung größerer Kräfte bzw. Drehmomente zwischen dem Reibbelag und dem Verbindungsabschnitt, das heißt dem Magnetkörper.

Die durchbruchsfreie Ausgestaltung des Verbindungsabschnitts erweist sich auch beim Herstellungsschritt des Verklebens von Reibbelag und Verbindungsabschnitt insofern als vorteilhaft, als dass kein Risiko dahingehend besteht, dass es zu einem ungewollten Abtropfen von Klebstoff durch Durchbrüche hindurch kommen kann. Es ist so ein vereinfachter Klebvorgang gestattet.

Insbesondere bei Elektromagnetbremsen, aber auch bei belagfreien Elektromagnetkupplungen dient der beschriebene Verbindungsabschnitt zudem als Schutz vor einem ungewollten Eintritt von Medien, da es aufgrund der durchbruchsfreien Ausgestaltung des Verbindungsabschnitts für Medien nicht möglich ist, selbigen passieren zu können. Die in Beschickungsrichtung eines Mediums vom Magnetkörper abgedeckten Bauteile sind mithin vor einem ungewollten Medienkontakt geschützt.

Die vorgesehene Nut lässt sich in vorteilhafter Weise allein durch Drehen ausbilden. Auf ein Fräsen kann insofern vollends verzichtet werden. Dies bringt den Vorteil mit sich, dass es keinerlei Entgratung bedarf, was insbesondere bei mehrfach durchfluteten Bauteilen besonders vorteilhaft ist.

Im Ergebnis der vorstehend erläuterten Ausgestaltung steht bei einer gleichzeitig vereinfachten Herstellung eine hinsichtlich ihrer technischen Eigenschaften verbesserte Konstruktion.

Mit Bezug auf die zweite Alternative ergeben sich folgende Vorteile:
Die Ausgestaltung, die Ankerplatte mit einer umlaufenden Nut auszurüsten, bewirkt den positiven Effekt, dass der gewünschte Magnetfluss gezielt mehrfach über die Ankerplatte gelenkt wird. Dies führt zu einer erhöhten Anziehungskraft und damit auch zu der Möglichkeit, höhere Drehmomente übertragen zu können. Dieser sich einstellende positive Effekt ist aus dem Stand der Technik nicht unbekannt. Allerdings finden mitunter, z.B. gemäß dem aus der DE 32 17 715 A1 bekannten Stand der Technik, zwecks Magnetflussumlenkung Durchbrüche insbesondere in Form von Löchern und Ausnehmungen Verwendung. Wie auch bei der der DE 32 17 715 vorbekannten Poltrennung führen derartige Durchbrüche zu einer Materialschwächung der Ankerplatte und bedingen insbesondere bei Kleinserien die vergleichsweise kostenaufwendige Herstellung durch Fräsen. Mit der erläuterten Ausgestaltung wird hier Abhilfe geschaffen, denn die Ankerplatte ist durchbrechungsfrei, das heißt ohne jegliche Durchbrüche ausgeführt. Es ist stattdessen eine umlaufende Nut vorgesehen, die eine so weitgehende Materialverjüngung der Ankerplatte bewirkt, dass der Magnetfluss innerhalb der Ankerplatte an dieser Stelle minimiert wird, wobei der Magnetfluss an dieser Unterbrechungsstelle umgelenkt und in den Magnetkörper überführt wird. Radial versetzt zu der umlaufenden Nut in der Ankerplatte ist eine Materialverjüngung im Magnetkörper vorgesehen, sodass an dieser Stelle der Magnetfluss erneut umgelenkt und zurück in die Ankerplatte überführt wird. Es ist so in vorteilhafter Weise eine doppeldurchflutete Ankerplatte gegeben, was zu dem schon erläuterten Effekt einer erhöhten Anziehungskraft führt. Dabei erbringt die Ausbildung einer Nut anstelle von Durchbrüchen die schon anhand der Poltrennung des Magnetkörpers vorbeschriebenen Vorteile.

Beiden Ausführungsformen ist gemein, dass eine Beeinflussung des Magnetflusses in Folge der eingebrachten Nuten erreicht ist. Dabei sind zur Magnetflussbeeinflussung keine Durchbrüche in Form von Ausnehmungen, Löchern oder dergleichen, sondern stattdessen umlaufende Nuten vorgesehen, womit das jeweilige Bauteil, das heißt der Magnetkörper beziehungsweise die Ankerplatte jeweils durchbrechungsfrei ausgebildet sind.

Gemäß einer dritten und bevorzugten Alternative sind die beiden vorbeschriebenen Alternativen miteinander kombiniert, womit sowohl der Verbindungsabschnitt des Magnetkörpers als auch die Ankerplatte jeweils durchbrechungsfrei ausgebildet sind und jeweils eine kreisförmige umlaufende Nut aufweisen. Durch diese Kombination wird der synergetische Effekt erzielt, dass sowohl die Poltrennung als auch die erhöhte Anziehungskraft erreicht sind, wobei die zur Poltrennung vorgesehene Nut im Magnetkörper auch dazu dient, als magnetkörperseitige Umlenkstelle für den Magnetfluss zwecks Doppeldurchflutung zu wirken. Die Nutausgestaltung im Magnetkörper dient damit einerseits der Minimierung eines ungewünschten Magnetstreuflusses innerhalb des Magnetkörpers sowie andererseits der Umlenkung des gewünschten Magnetflusses vom Magnetkörper in die Ankerplatte.

Im Ergebnis erbringt die bevorzugte dritte Alternative den Vorteil, dass hinsichtlich des Magnetkörpers eine Streuflussminimierung erreicht ist einerseits und dass eine erhöhte Anziehungskraft durch eine gezielte Umlenkung des gewünschten Magnetflusses erreicht ist andererseits. Dabei dient die magnetkörperseitig ausgebildete Nut sowohl der Streuflussminimierung als auch der Magnetflussumlenkung, was hinsichtlich einer vereinfachten und kostengünstigeren Herstellung von besonderem Vorteil ist.

Gemäß einem weiteren Merkmal der Erfindung ist vorgesehen, dass die Nut eine teilelliptische, vorzugsweise kreisförmige, oder polygonale Querschnittskontur aufweist. Eine solche Ausgestaltung lässt sich in besonders einfacher Weise ausbilden und sorgt bei gleichzeitiger Aufrechterhaltung einer gewissen mechanischen Stabilität für eine solche Verjüngung des Verbindungsabschnitts, dass eine Poltrennung ausgebildet wird, die nur noch einen minimalen Streufluss zulässt.

Gemäß einem weiteren Merkmal der Erfindung ist vorgesehen, dass die Nut auf einer der Ankerplatte zugewandten Seite und/oder auf einer der Ankerplatte abgewandten Seite des Verbindungsabschnitts ausgebildet ist. Je nach Bearbeitungszugänglichkeit des Magnetkörpers kann mithin eine Nutausbildung entweder auf der einen oder auf der anderen Seite des vom Magnetkörper bereitgestellten Verbindungsabschnitts vorgesehen sein. Dies schafft während der Herstellung eine gewisse Flexibilität, was eine vereinfachte Herstellung unterstützt. Wenn die Nut auf der vom Anker abgewandten Seite des Verbindungsabschnitts vorgesehen ist, ergibt sich hierdurch der Vorteil einer Vergrößerung der dem Anker zugewandten Reibfläche. Dies erhöht das Verschleißvolumen und damit die Lebensdauer der Kupplung bzw. Bremse.

Alternativ ist die Ausgestaltung einer Nut auf beiden Seiten des Verbindungsabschnitts, mithin sowohl auf der der Ankerplatte zugewandten Seite als auch auf der der Ankerplatte abgewandten Seite des Verbindungsabschnitts. Eine solche Doppel-Nut-Ausgestaltung kann sich insbesondere aus Gründen der vereinfachten Herstellung in vorteilhafterweise anbieten. Zudem kann eine optimierte Poltrennung unter gleichzeitiger Stabilität des Verbindungsabschnitts beispielsweise dadurch erreicht werden, dass eine in radialer Richtung versetzte Anordnung der vorgesehenen Nuten gegeben ist.

Gemäß einem weiteren Merkmal der Erfindung ist vorgesehen, dass eine zur Nut radial beabstandete zweite Nut vorgesehen ist. Gemäß diesem Ausführungsbeispiel kommt nicht nur eine Nut zum Einsatz, sondern zusätzlich auch noch eine zweite Nut. Dabei sind die beiden Nuten vorzugsweise parallel verlaufend zueinander angeordnet, und zwar unter Belassung eines Abstandes. Die Ausbildung zweier Nuten kommt insbesondere bei entsprechend groß ausgebildeten Verbindungsabschnitten zum Tragen. Es kann hierdurch eine weitere Streuflussminimierung erreicht werden. Dabei ist es auch möglich, mit Bezug auf die relative Lage der Ankerplatte die eine der beiden Nuten auf der einen Seite des Verbindungsabschnitts und die andere der beiden Nuten auf der anderen Seite des Verbindungsabschnitts auszubilden.

Erfindungsgemäß ist vorgesehen, dass die der Ankerplatte zugewandte Seite des Verbindungsabschnitts einen Reibbelag trägt. Dieser ist mit dem Verbindungsabschnitt verklebt, wobei die erfindungsgemäße Ausgestaltung die schon vorstehend beschriebenen Vorteile erbringt.

Der Reibbelag wird erfindungsgemäß von einem Reibring bereitgestellt. Alternativ ist eine direkte Verklebung von Reibbelag und Verbindungsabschnitt. Der Vorteil der Reibringausgestaltung liegt insbesondere in einer vereinfachten Montage bzw. Demontage, insbesondere im Reparaturfall.

Erfindungsgemäß wird der Reibring mit dem Verbindungsabschnitt verklebt, was ebenfalls zu den schon vorstehend genannten Vorteilen führt.

Zudem ist erfindungsgemäß vorgesehen, dass die der Ankerplatte zugewandte Seite des Verbindungsabschnitts zwei Radialabsätze aufweist. Es ist mithin eine stufenförmige Ausgestaltung des Verbindungsabschnitts vorgesehen. Diese ist derart gewählt, dass gemäß einem weiteren Merkmal der Erfindung vorgesehen ist, dass der Reibbelag bzw. der Reibring von dem einen der beiden Radialabsätze getragen ist und mit dem anderen der beiden Radialabsätze bündig abschließt. Es ist so ein formschlüssiges Einsetzen des Reibbelags bzw. Reibrings ermöglicht, wodurch auch eine Zentrierungshilfe geschaffen ist. Dies erlaubt eine vereinfachte Handhabung während der Herstellung. Dabei ist die Ausgestaltung der Radialabsätze und der Nut bevorzugterweise derart ausgewählt, dass die Nut im endmontierten Zustand vom Reibbelag bzw. Reibring vollständig abgedeckt ist. Es ergibt sich so ein sprungfreier bündiger Übergang zwischen Reibbelag bzw. Reibring einerseits und nebengeordnetem Radialabsatz andererseits. Im endmontierten Zustand schließt der Reibring mitunter nicht exakt bündig ab, sondern bildet mittels Vor- bzw. Rückstand einen sogenannten Polflächenrück bzw. -vorstand mit ab. Das Delta kann in diesem Fall wenige Hundertstel bis einige Zehntel Millimeter betragen. Im Sinne der Erfindung ist ein solcher Polflächenrück bzw. -vorstand bündig im vorerläuterten Sinne.

Weitere Merkmale und Vorteile der Erfindung ergeben sich aus der nachfolgenden Beschreibung anhand der Figuren. Dabei zeigen
- Fig. 1: schematisch in teilgeschnittener Seitenansicht eine Elektromagnetkupplung der erfindungsgemäßen Art;
- Fig. 2: in schematisch perspektivischer Darstellung einen erfindungsgemäßen Kupplungsrotor einer Elektromagnetkupplung gemäß einer zweiten Ausführungsform;
- Fig. 3: ausschnittsweise in teilgeschnittener Seitenansicht den Kupplungsrotor nach Fig. 2;
- Fig. 4: schematisch in teilgeschnittener Seitenansicht eine Elektromagnetbremse;
- Fig. 5: schematisch in teilgeschnittener Seitenansicht eine Elektromagnetkupplung der erfindungsgemäßen Art gemäß einer dritten Ausführungsform und
- Fig. 6: schematisch in teilgeschnittener Seitenansicht die Elektromagnetkupplung nach Figur 5 mit eingezeichnetem Magnetfluss.

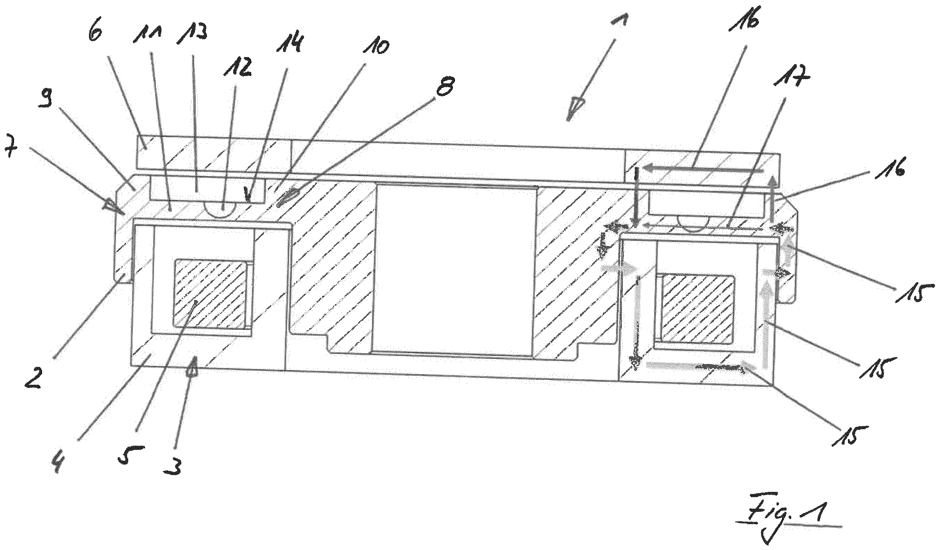

Fig. 1 lässt die erfindungsgemäße Ausgestaltung beispielhaft anhand einer Elektromagnetkupplung 1 erkennen.

Die Elektromagnetkupplung 1 verfügt in an sich bekannter Weise über einen Elektromagneten 3, der seinerseits über ein Magnetgehäuse 4 verfügt, das eine Spule 5 aufnimmt.

In Relation zum Elektromagneten 3 verdrehbar ist ein im Querschnitt kreisförmig ausgebildeter Magnetkörper in Form eines Kupplungsrotors 2 vorgesehen. Dieser wirkt mit einer Ankerplatte 6 zusammen, die unter Belassung eines Spaltraums beabstandet zur Stirnseite des Kupplungsrotors 2 angeordnet ist.

Der Kupplungsrotor 2 stellt einen ersten Polbereich 7 und einen zweiten Polbereich 8 zur Verfügung, die im Falle einer Bestromung des Elektromagneten 3 einen Außenpol 9 bzw. einen Innenpol 10 bereitstellen.

Zwischen dem ersten Polbereich 7 und dem zweiten Polbereich 8 ist ein Verbindungsabschnitt 11 ausgebildet, der zur Trennung der beiden Pole 9 und 10 über eine Poltrennung verfügt. Diese Poltrennung ist erfindungsgemäß durch eine mit Bezug den Kupplungsrotor 2 kreisförmig umlaufende Nut 12 gebildet, wobei der Verbindungsabschnitt 11 im Übrigen durchbruchsfrei ausgebildet ist.

Die mit Bezug auf die Zeichnungsebene nach Fig. 1 rechts eingezeichneten Pfeile 15, 16 und 17 stellen schematisch den Verlauf des magnetischen Flusses im Falle einer Bestromung der Spule 5 dar. Technisch gewollt ist eigentlich nur der Magnetfluss, wie er durch die Pfeile 15 und 16 dargestellt ist. Der Pfeil 17 stellt den ungewollten Streufluss dar. Dieser wird in Kauf genommen, um einen einteilig ausgebildeten Kupplungsrotor 2 bereitstellen zu können, dessen Außenpol 9 und Innenpol 10 mechanisch ausreichend fest miteinander verbunden sind. Dabei hängt die Größenordnung des Streuflusses von den Restquerschnitten zwischen Außenpol 9 und Innenpol 10 ab. Daher wird der Restquerschnitt unter Berücksichtigung einer mechanisch ausreichenden Festigkeit möglichst klein gehalten, das heißt der Verbindungsabschnitt 11 im Bereich der Nut 12 durch Ausbildung der Nut 12 möglichst weit verjüngt.

Gemäß dem gezeigten Ausführungsbeispiel nach Fig. 1 ist die Nut 12 auf der der Ankerplatte 6 zugewandten Seite 14 des Verbindungsabschnitts 11 ausgebildet. Dabei ist zwischen Verbindungsabschnitt 11 und Ankerplatte 16 ein Aufnahmebereich 13 ausgebildet, in den mit Bezug auf den stirnseitigen Abschluss des Kupplungsrotors 2 bündig ein Reibbelag oder ein mit einem Reibbelag ausgestatteter Reibring eingebracht werden können. Für ein Verbinden eines Reibbelags oder eines Reibrings mit dem Kupplungsrotor 2 kann der Reibbelag bzw. der Reibring mit dem Kupplungsrotor 2 verklebt sein.

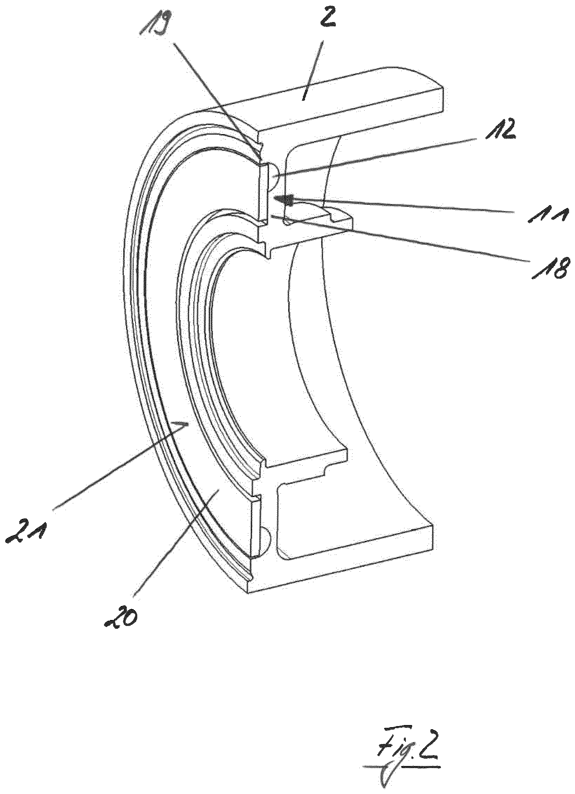

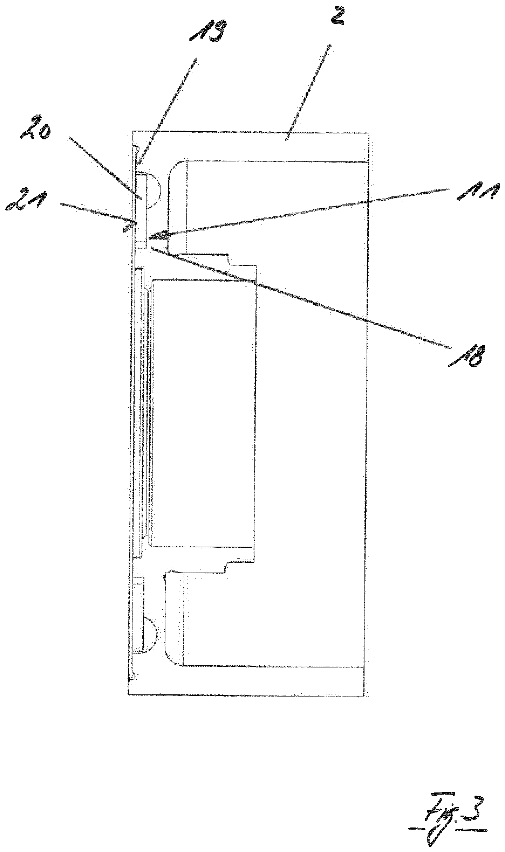

Die Figuren 2 und 3 lassen ein weiteres Ausführungsbeispiel eines Kupplungsrotors 2 erkennen. Gemäß diesem Ausführungsbeispiel ist der Verbindungsabschnitt 11 mit Radialabsätzen 18 und 19 ausgerüstet, wobei ein Reibring 20 mit einem Reibbelag 21 in einen vom Radialabsatz 18 bereitgestellten Aufnahmeraum eingesetzt ist, und zwar derart, dass der Reibring 20 mit seinem Reibbelag 21 bündig mit dem anderen Radialabsatz 19 abschließt. Dabei ist die erfindungsgemäß vorgesehene Nut 12 vom Reibring 20 vollständig abgedeckt. Es ist so nicht nur eine quasi stoffschlüssige Verbindung durch Verkleben gegeben, es liegt infolge des Einsetzens des Reibrings in die vom Radialabsatz 19 bereitgestellte Aufnahme auch ein Formschluss vor, was insbesondere einer Zentrierung bei der Montage dienlich ist.

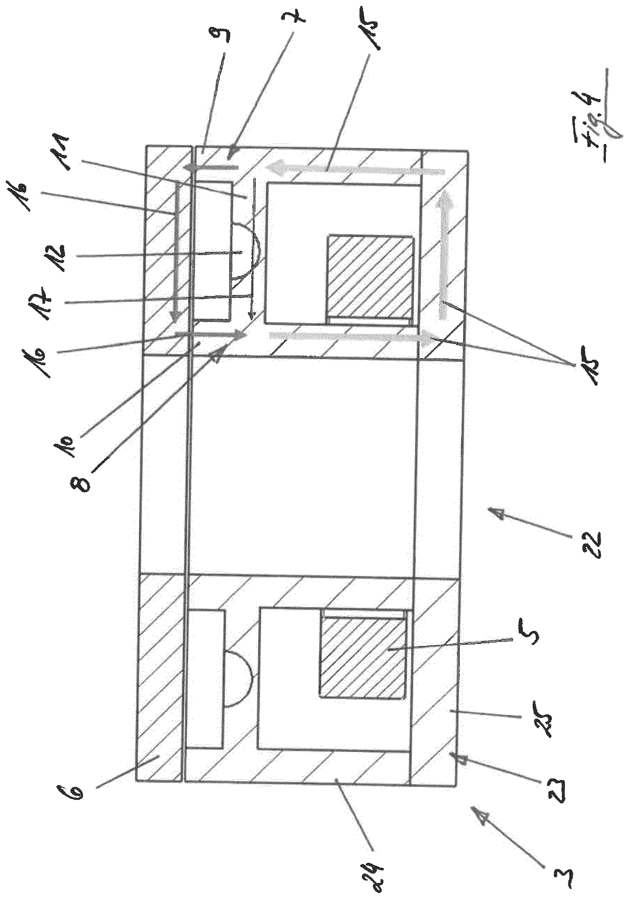

Fig. 4 lässt die erfindungsgemäße Ausgestaltung anhand des Beispiels einer Elektromagnetbremse 22 erkennen, die in Fig. 4 ausschnittsweise dargestellt ist. Es sind eine Ankerplatte 6 sowie ein Elektromagnet 3 zu erkennen, wobei der Elektromagnet 3 über ein Magnetgehäuse 23 verfügt. Dieses ist zweiteilig ausgebildet und verfügt über einen als Magnetkörper dienenden Magnetgehäusetopf 24 sowie über einen Magnetgehäuserücken 25. Im endmontierten Zustand nimmt das Magnetgehäuse 23 eine Spule 5 in an sich bekannter Weise auf.

Wie schon vorstehend anhand der Elektromagnetkupplung erläutert, stellt der als Magnetkörper dienende Magnetgehäusetopf 24 einen ersten Polbereich 7 und einen zweiten Polbereich 8 bereit, die zur Ausbildung einer hinreichenden mechanischen Stabilität über einen Verbindungsabschnitt 11 miteinander gekoppelt sind. Über diesen Verbindungsabschnitt 11 fließt im bestimmungsgemäßen Verwendungsfall ein Streufluss in Entsprechung des Pfeils 17. Um diesen Streufluss zu minimieren, ist eine Poltrennung in der Ausgestaltung einer Nut 12 vorgesehen, die kreisförmig umlaufend ausgebildet ist. Im Übrigen ist der Verbindungsabschnitt 11 durchbruchsfrei ausgebildet. Der eigentliche gewollte Magnetfluss ist durch die Pfeile 15 und 16 dargestellt.

Im Übrigen gilt das schon vorstehend zur Elektromagnetkupplung 1 Ausgeführte entsprechend.

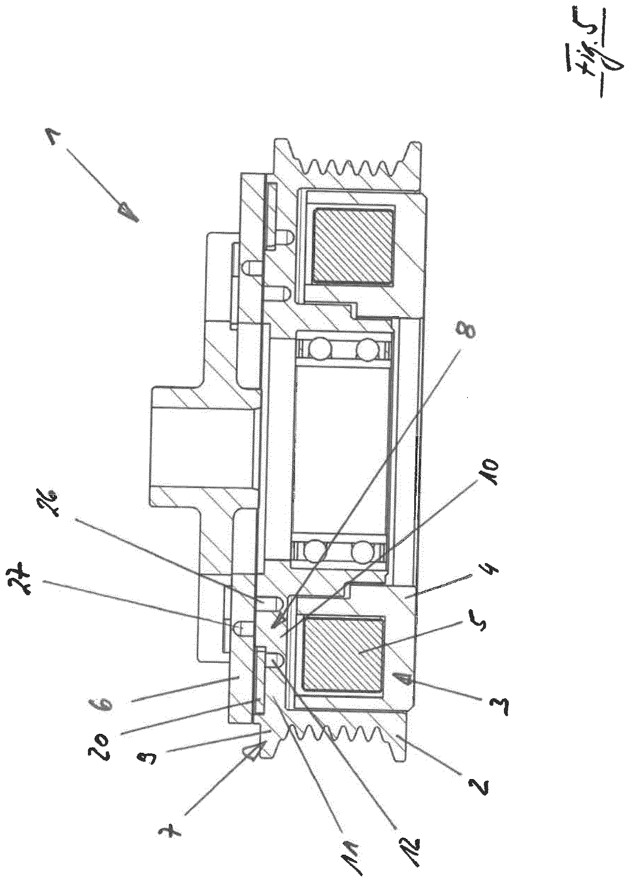

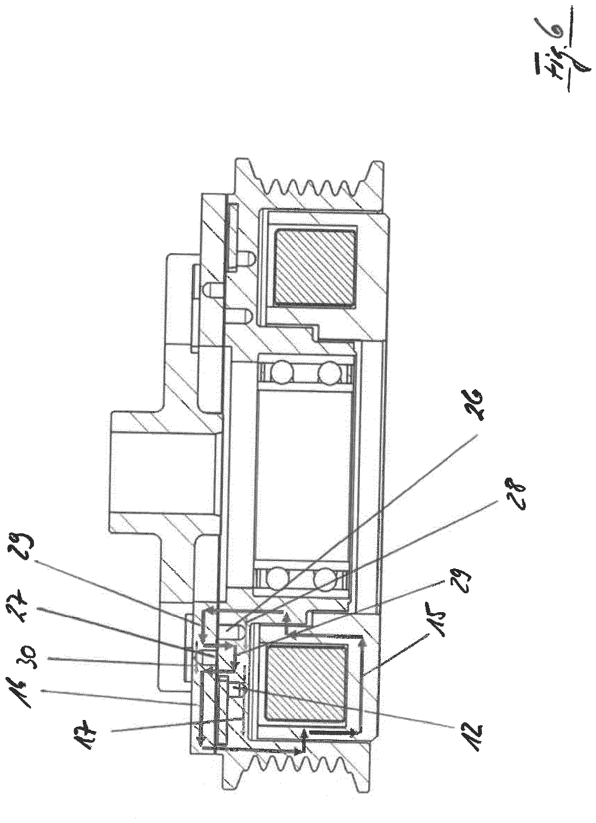

Eine dritte und bevorzugte Ausführungsform ist in den Figuren 5 und 6 dargestellt. In Ergänzung zu den Ausführungsformen nach den Figuren 1 bis 4 ist gemäß der Ausführungsform nach den Figuren 5 und 6 vorgesehen, dass sowohl der Verbindungsabschnitt 11 des Magnetkörpers 2 als auch die Ankerplatte 6 durchbrechungsfrei ausgebildet sind, wobei sowohl der Verbindungsabschnitt 11 eine kreisförmig umlaufende Nut 12 als auch die Ankerplatte 6 eine kreisförmig umlaufende Nut 27 aufweisen. Der Verbindungsabschnitt 11 verfügt des Weiteren über eine zweite umlaufende Nut 26, die zur ersten umlaufenden Nut 12 radial beabstandet ist. Die von der Ankerplatte 6 bereitgestellte Nut 27 ist in radialer Richtung zwischen den beiden Nuten 12 und 26 angeordnet, wie sich dies insbesondere aus der Darstellung nach Figur 5 ergibt.

Die magnetkörperseitig bereitgestellte Nut 12 dient der Poltrennung, wie dies schon vorstehend anhand der Figuren 1 bis 4 erläutert ist. Die gemäß der Ausführungsform nach den Figuren 5 und 6 des Weiteren vorgesehenen Nuten 26 und 27 dienen in Kombination mit der Nut 12 einer Umlenkung des gewünschten Magnetflusses. Es ist hierdurch eine doppeldurchflutete Kupplung 1 gegeben, was in vorteilhafter Weise eine erhöhte Anziehungskraft zwischen Ankerplatte 6 und Magnetkörper 2 bedingt.

Die Umlenkung des gewünschten Magnetflusses ergibt sich insbesondere aus der Darstellung nach Figur 6, dergemäß der sich einstellende Magnetfluss durch entsprechende Pfeile 15 bis 17 und 28 bis 30 dargestellt ist.

Der sich einstellende Magnetfluss ergibt sich in Entsprechung der Pfeile 15, 19, 29 und 16. Dabei ist dieser Magnetfluss in Folge der Ausgestaltung der Nuten 26 und 30 umgelenkt, wie sich dies insbesondere aus der Darstellung nach Figur 6 ergibt. "Umlenkung" im Sinne der Erfindung bedeutet dabei, dass der Magnetfluss zunächst vom Magnetkörper 2 auf die Ankerplatte 6 übergeht. Dieser Übergang wird durch die Nut 26 erzwungen.

Der Magnetfluss springt dann von der Ankerplatte 6 zurück auf den Magnetkörper 2. Diese Umlenkung ist durch die ankerplattenseitige Nut 27 erzwungen. Alsdann springt der Magnetfluss vom Magnetkörper 2 wieder zurück auf die Ankerplatte 6, und zwar aufgrund der Nut 12. Im Ergebnis ist so eine doppelte Magnetflussdurchflutung der Ankerplatte 6 erreicht.

An den jeweiligen Nuten 12, 27 und 26 fällt jeweils ein Streufluss ab, wie dies durch die Pfeile 17, 28 und 30 symbolisiert ist.

### Bezugszeichen

- 1: Elektromagnetkupplung
- 2: Kupplungsrotor (Magnetkörper)
- 3: Elektromagnet
- 4: Magnetgehäuse
- 5: Spule
- 6: Ankerplatte
- 7: erster Polbereich
- 8: zweiter Polbereich
- 9: Außenpol
- 10: Innenpol
- 11: Verbindungsabschnitt
- 12: Nut
- 13: Aufnahmebereich
- 14: Seite
- 15: Magnetfluss (Pfeil)
- 16: Magnetfluss (Pfeil)
- 17: Streufluss (Pfeil)
- 18: Radialabschnitt
- 19: Radialabschnitt
- 20: Reibring
- 21: Reibbelag
- 22: Elektromagnetbremse
- 23: Magnetgehäuse
- 24: Magnetgehäusetopf (Magnetkörper)
- 25: Magnetgehäuserücken
- 26: Nut
- 27: Nut
- 28: Streufluss (Pfeil)
- 29: Magnetfluss (Pfeil)
- 30: Streufluss (Pfeil)

## Patentansprüche

1. Elektromagnetkupplung oder -bremse mit einem im Querschnitt kreisförmigen Magnetkörper (2, 24) und einer damit zusammenwirkenden Ankerplatte (6), wobei der Magnetkörper (2, 24) einen ersten Polbereich (7) und einen davon radial beabstandeten zweiten Polbereich (8) aufweist, wobei der erste Polbereich (7) einen Außenpol (9) und der zweite Polbereich (8) einen Innenpol (10) bereitstellt und wobei zwischen dem ersten Polbereich (7) und dem zweiten Polbereich (8) ein Verbindungsabschnitt (11) ausgebildet ist, wobei der Verbindungsabschnitt (11) des Magnetkörpers (2, 24) durchbruchsfrei ausgebildet ist und eine kreisförmig umlaufende Nut (12) aufweist, **dadurch gekennzeichnet, dass** die der Ankerplatte (6) zugewandte Seite (14) des Verbindungsabschnitts (11) einen Reibbelag (21) trägt, der von einem Reibring (20) bereitgestellt ist, wobei der Reibring (20) mit dem Verbindungsabschnitt (11) verklebt ist, und dass die der Ankerplatte (6) zugewandte Seite (14) des Verbindungsabschnitts (11) zwei Radialabsätze (18, 19) aufweist, wobei der Reibring (20) von dem einen der beiden Radialabsätze (18, 19) getragen ist und mit dem anderen der beiden Radialabsätze (18, 19) bündig abschließt.

2. Elektromagnetkupplung oder -bremse nach Anspruch 1, **dadurch gekennzeichnet, dass** die Nut (12) eine teilelliptische, vorzugsweise teilkreisförmige, oder polygonale Querschnittskontur aufweist.

3. Elektromagnetkupplung oder -bremse nach Anspruch 1 oder 2, **dadurch gekennzeichnet, dass** die Nut (12) auf der der Ankerplatte (6) zugewandten Seite (14) des Verbindungsabschnitts (11) ausgebildet ist.

4. Elektromagnetkupplung oder -bremse nach einem der vorhergehenden Ansprüche, **dadurch gekennzeichnet, dass** eine zur Nut (12) radial beabstandete zweite Nut (26) vorgesehen ist.

5. Elektromagnetkupplung oder -bremse nach einem der vorhergehenden Ansprüche, **dadurch gekennzeichnet, dass** die Ankerplatte (6) durchbruchsfrei ausgebildet ist und eine kreisförmig umlaufende Nut (27) aufweist.

6. Elektromagnetkupplung oder -bremse nach den Ansprüchen 4 und 5, **dadurch gekennzeichnet, dass** die von der Ankerplatte (6) bereitgestellte Nut (27) in radialer Richtung zwischen den beiden Nuten (12, 26) des Magnetkörpers (2, 24) angeordnet ist.

7. Elektromagnetkupplung oder -bremse nach einem der vorhergehenden Ansprüche, **dadurch gekennzeichnet, dass** die Nut (12) des Verbindungsabschnitts (11) vom Reibring (20) vollständig abgedeckt ist.

## Claims

1. Electromagnetic clutch or brake with a magnet body (2, 24) of circular cross-section and an armature plate (6) interacting with it, wherein the magnet body (2, 24) has a first pole region (7) and a second pole region (8) radially spaced therefrom, the first pole region (7) providing an external pole (9) and the second pole region (8) providing an internal pole (10), wherein a connecting portion (11) is formed between the first pole region (7) and the second pole region (8), wherein the connecting portion (11) of the magnetic body (2, 24) is designed free of breakthroughs and has a circular circumferential groove (12), **characterized in that** the side (14) of the connecting portion (11) facing the armature plate (6) has a friction lining (21) which is provided by a friction ring (20), the friction ring (20) being glued to the connecting section (11), and that the side (14) of the connecting portion (11) facing the armature plate (6) has two radial shoulders (18, 19), the friction ring (20) being supported by one of the two radial shoulders (18, 19) and terminating flush with the other one of the two radial shoulders (18, 19).

2. Electromagnetic clutch or brake according to claim 1, **characterized in that** the groove (12) has a partially elliptical, preferably partially circular or polygonal cross-sectional contour.

3. Electromagnetic clutch or brake according to claim 1 or 2, **characterized in that** the groove (12) is formed on the side (14) of the connecting portion (11) facing the armature plate (6).

4. Electromagnetic clutch or brake according to any one of the preceding claims, **characterized in that** a second groove (26) is provided which is radially spaced from the groove (12).

5. Electromagnetic clutch or brake according to any one of the preceding claims, **characterized in that** the armature plate (6) is formed free of breakthroughs and has a circular circumferential groove (27).

6. Electromagnetic clutch or brake according to claims 4 and 5, **characterized in that** the groove (27) provided by the armature plate (6) is arranged in the radial direction between the two grooves (12, 26) of the magnetic body (2, 24).

7. Electromagnetic clutch or brake according to any one of the preceding claims, **characterized in that** the groove (12) of the connecting portion (11) is completely covered by the friction ring (20).

## Revendications

1. Embrayage ou frein électromagnétique comprenant un corps magnétique (2, 24) de section circulaire et une plaque d'armature (6) coopérant avec celui-ci, le corps magnétique (2, 24) présentant une première zone polaire (7) et une deuxième zone polaire (8) espacée radialement de celle-ci, la première zone polaire (7) fournissant un pôle externe (9) et la deuxième zone polaire (8) fournissant un pôle interne (10), une partie de connexion (11) étant formée entre la première zone polaire (7) et la deuxième zone polaire (8), la partie de connexion (11) du corps magnétique (2, 24) étant conçue sans percée et possède une rainure circonférentielle circulaire (12), **caractérisée en ce que** le côté (14) de la partie de connexion (11) faisant face à la plaque d'armature (6) porte un revêtement de friction qui est fourni par un anneau de friction (20), l'anneau de friction (20) étant collé à la partie de connexion (11), et que le côté (14) de la partie de connexion (11) faisant face à la plaque d'armature (6) comporte deux marches radiales (18, 19), l'anneau de friction (20) étant supporté par l'une des deux marches radiales (18, 19) et se terminant au ras de l'autre des deux marches radiales (18, 19).

2. Embrayage ou frein électromagnétique selon la revendication 1, **caractérisé en ce que** la rainure (12) a un contour de section transversale partiellement elliptique, de préférence partiellement circulaire ou polygonale.

3. Embrayage ou frein électromagnétique selon la revendication 1 ou 2, **caractérisé en ce que** la rainure (12) est formée sur le côté (14) de la partie de connexion (11) faisant face à la plaque d'armature (6).

4. Embrayage ou frein électromagnétique selon l'une quelconque des revendications précédentes, **caractérisé en ce qu'**il est prévu une seconde rainure (26) qui est radialement espacée de la rainure (12).

5. Embrayage ou frein électromagnétique selon l'une quelconque des revendications précédentes, **caractérisé en ce que** la plaque d'armature (6) est formée sans percées et présente une rainure circulaire circonférentielle (27).

6. Embrayage ou frein électromagnétique selon les revendications 4 et 5, **caractérisé en ce que** la rainure (27) fournie par la plaque d'armature (6) est disposée dans la direction radiale entre les deux rainures (12, 26) du corps magnétique (2, 24).

7. Embrayage ou frein électromagnétique selon l'une quelconque des revendications précédentes, **caractérisé en ce que** la rainure (12) de la partie de connexion (11) est complètement recouverte par l'anneau de friction (20).
